# EUROPEAN PATENT APPLICATION

(11) **EP 4 830 583 A1**
(43) Date of publication of application: **28.10.2026**
(21) Application number: 26724890.4
(22) Date of filing: 02.03.2026
(51) Int. Cl.: A47B 88/95

(54) **DRAWER, DRAWER CONNECTION DEVICE, AND CONNECTION ASSEMBLY**

(30) Priority: 03.03.2025 CN 202510243658
(71) Applicant: Dongguan Dige Hardware Manufactory Co. Ltd, Dongguan City Guangdong 523218 (CN)
(72) Inventor: HE, Quanfang, Dongguan, Guangdong 523218 (CN)
(74) Representative: Metida
(86) International application number: PCT/CN2026/080879
(87) International publication number: WO 2026/184542

(57) **Abstract**

The present disclosure relates to the technical field of panel connection, and in particular to a drawer, a drawer connecting device and a connecting assembly. The drawer includes a side panel, a front panel, an insert member, a base plate, a first locking member, a second locking member, a connecting rod and a first elastic member. The panel is connected to the insert member, and the side panel is connected to the connecting assembly. The first locking member is rotatably connected to the base plate about a first axis, and the second locking member is rotatably connected to the base plate about a second axis. The connecting rod includes a first end and a second end, the first end is rotatably connected to the first locking member, and the second end is rotatably connected to the second locking member. One end of the first elastic member is connected to the first locking member, another end of the first elastic member is connected to the base plate, and the first elastic member is configured to provide a force for rotating the first locking member to an unlocked state and a locked state. The first locking member, the second locking member or the connecting rod is provided with a compensation slot. By arranging the compensation slot, the insert member can be locked with the locking members, thereby enhancing the reliability of connection between the panels and facilitating the simplification of the structure.

## Description

### CROSS-REFERENCE TO RELATED APPLICATION

The present disclosure claims priority to Chinese Patent Application No. 202510243658.3, which was filed March 3, 2025, and the entirety of which is incorporated herein by reference.

### TECHNICAL FIELD

The disclosure relates to the technical field of panel connection, in particular to a drawer, a drawer connecting device, and a connecting assembly.

### BACKGROUND

At present, a connection between two panels is generally achieved through bolts or connectors. The bolts are easy to loosen under a condition of long-time stress, and the adjustability in an assembly process is poor. The connectors not only facilitate the installation of panels, but also make it convenient to subsequently adjust relative positions between a side panel and a front panel, thereby addressing issues of incompatibility that may arise during the manufacturing and assembly processes of the panels. A connector generally includes a connecting assembly configured to connect to one panel and an insert member connected to another panel. The insert member is engaged with the connecting assembly so as to realize the installation between the panels.

In the event that an assembly distance between two panels is relatively long in one direction, existing connectors require insert members to snap-fit and lock with a plurality of locking members, so as to reduce loosening and improve connection tightness. However, since the existing connectors typically allow only overall position adjustment relative to the panels and cannot independently adjust the relative positions of the plurality of locking members, in the event that the plurality of locking members are provided, the manufacturing and assembly tolerances of the locking members, the insert members, and the panels often result in a situation where, after the two panels are connected with the plurality of locking members and the insert members, the connected panels may be engaged by only one locking member, while the other locking members fail to be properly snap-fitted and locked in place. This easily leads to issues such as stress concentration or loosening.

### SUMMARY

An object of the present disclosure is to provide a connecting assembly, a drawer connecting device, and a drawer capable of achieving locking of an insert member with a plurality of locking members to improve reliability of connection between panels and contribute to simplification of a structure.

In order to achieve the above object, the present disclosure provides a connecting assembly, including:
a base plate;
a first locking member, rotatably connected to the base plate about a first axis;
a second locking member, rotatably connected to the base plate about a second axis;
a connecting rod, including a first end rotatably connected to the first locking member and a second end rotatably connected to the second locking member, and
a first elastic member, where one end of the first elastic member is connected to the first locking member, another end of the first elastic member is connected to the base plate, and the first elastic member is configured to provide a force for rotating the first locking member toward an unlocked state or a locked state;
a compensation slot is provided in the first locking member, the second locking member, or the connecting rod;
the compensation slot is configured such that in the event that the first locking member and/or the second locking member is pushed by an insert member moving along a first direction and the second locking member is rotated to the locked state, the first locking member is capable of being rotated to the locked state by means of the compensation slot under an action of the first elastic member.

In some embodiments, the first locking member or the first end is provided with the compensation slot, the first locking member is rotatably connected to the first end through a first shaft, and the first shaft is inserted into the compensation slot;
where in the event that the first locking member and/or the second locking member is pushed by the insert member moving along the first direction and the second locking member is rotated to the locked state, the first shaft is capable of sliding along the compensation slot, allowing the first locking member to rotate to the locked state.

In some embodiments, the compensation slot includes a first position and a second position, in the event that the first locking member is rotated to the unlocked state, the first elastic member exerts a force on the first locking member to rotate the first locking member toward the unlocked state, and the first shaft is located at the first position; and in the event that the first locking member is rotated to the locked state, the first elastic member exerts a force on the second locking member to rotate the second locking member toward the locked state, and the first shaft is located at the second position.

In some embodiments, the compensation slot is located on the first end of the connecting rod, the first position and the second position are sequentially arranged along a length direction of the connecting rod, one end of the first shaft is connected to the first locking member, another end of the first shaft protrudes out of the compensation slot, and the second position is closer to the second end than the first position.

In some embodiments, the first locking member is provided with a first snap slot, one end of the first snap slot is configured as a first opening, and another end of the first snap slot is configured as a first closed end; and the second locking member is provided with a second snap slot, one end of the second snap slot is configured as a second opening, and another end of the second snap slot is configured as a second closed end;

in the event that the first locking member is in the locked state, the insert member is inserted into the first snap slot, and in the event that the second locking member is in the locked state, the insert member is inserted into the second snap slot.

In some embodiments, the first elastic member is located between the first locking member and the second locking member, and a connection between the first elastic member and the first locking member is located between the first shaft and the first snap slot.

In some embodiments, the first snap slot includes a first inner wall and a second inner wall arranged oppositely in sequence away from the first axis, and in the event that the first locking member is in the locked state, the insert member is inserted between the first inner wall and the second inner wall;
the second snap slot includes a third inner wall and a fourth inner wall arranged oppositely in sequence away from the second axis, and in the event that the second locking member is in the locked state, the insert member is inserted between the third inner wall and the fourth inner wall.

In some embodiments, the second inner wall extends from the first closed end to the first opening of the first snap slot, and in an extension direction of the second inner wall, a distance from the second inner wall to the first axis is constant or gradually increases; and/or
the fourth inner wall extends from the second closed end to the second opening of the second snap slot, and in an extension direction of the fourth inner wall, a distance from the fourth inner wall to the second axis is constant or gradually increases.

In some embodiments, the first inner wall extends from the first closed end to the first opening, and in an extension direction of the first inner wall, a distance from the first inner wall to the first axis gradually increases; and/or
the third inner wall extends from the second closed end to the second opening, and in an extension direction of the third inner wall, a distance from the third inner wall to the second axis gradually increases.

In some embodiments, in the event that the first locking member is in the unlocked state, a direction of a force exerted on the first locking member by the first elastic member is toward a first side of the first axis; and in the event that the first locking member is in the locked state, the direction of the force exerted on the first locking member by the first elastic member is toward a second side of the first axis,
where, the first side and the second side are two opposite sides of the first axis.

In some embodiments, the connecting assembly further includes a first limiting portion and a second limiting portion configured to limit insertion of the insert member along the first direction, where the first limiting portion is arranged at a side of the first locking member in the first direction, and the second limiting portion is arranged at a side of the second locking member in the first direction.

In some embodiments, the insert member is provided with a first snap-fit block and a second snap-fit block, and in the event that the insert member is inserted into the connecting assembly along the first direction, the first snap-fit block is inserted into the first snap slot, and the second snap-fit block is inserted into the second snap slot, such that the first locking member and the second locking member are in the locked state with the insert member;
in the event that the first locking member and the second locking member are in the locked state:
defining a line passing through a center of the first snap-fit block and extending along the first direction as a first reference line, and defining a line passing through the center of the first snap-fit block and perpendicularly intersecting the first axis as a first connecting line;
defining a line passing through a center of the second snap-fit block and extending along the first direction as a second reference line, and defining a line passing through the center of the second snap-fit block and perpendicularly intersecting the second axis as a second connecting line; and defining an included angle formed by the first connecting line and the first reference line, or formed by the second connecting line and the second reference line, as 0, and satisfying 0°≤θ≤θₖ, where θₖ is a critical angle at which the first locking member or the second locking member remains in the locked state with the insert member, and the insert member is not capable of being pulled out from the first locking member or the second locking member.

In some embodiments, the connector assembly further includes a second elastic member, where one end of the second elastic member is connected to the second locking member, another end of the second elastic member is connected to the base plate, and the second elastic member is configured to provide a force for rotating the second locking member toward an unlocked state or a locked state.

In some embodiments, the first elastic member and the second elastic member are located at either side of the connecting rod.

In some embodiments, the first end is rotatably connected to the first locking member about a third axis, and the second end is rotatably connected to the second locking member about a fourth axis;
the compensation slot is configured such that:
in the event that the first locking member or the first end is provided with the compensation slot, the third axis is capable of moving along the compensation slot so as to enable the first locking member to rotate to the locked state;
in the event that the second locking member or the second end is provided with the compensation slot, the fourth axis is capable of moving along the compensation slot so as to enable the first locking member to rotate to the locked state.

In order to achieve the same object, the present disclosure further provides a drawer connecting device, including the insert member and the connecting assembly, where the insert member is configured to insert into the connecting assembly along the first direction and push and rotate the first locking member and/or the second locking member, and in the event that the first locking member and/or the second locking member is rotated to the locked state, the insert member is locked with the first locking member and the second locking member.

In some embodiments, the insert member is provided with a first snap-fit block and a second snap-fit block, the first locking member is provided with a first snap slot having a first opening, and the second locking member is provided with a second snap slot having a second opening;
in the event that the first snap-fit block is inserted into the first snap slot through the first opening and is confined in the first snap slot, the first locking member and the insert member are locked;
in the event that the second snap-fit block is inserted into the second snap slot through the second opening and is confined in the second snap slot, the second locking member and the insert member are locked.

In order to achieve the same object, the present disclosure further provides a drawer, including a side panel, a front panel, and the drawer connecting device, where the front panel is connected to the insert member, and the side panel is connected to the connecting assembly.

The embodiments of the present disclosure have the following technical effects.

The connecting assembly of the present disclosure includes the first locking member and the second locking member rotatably installed on the base plate, and the first locking member is connected to the second locking member through the connecting rod, so that in the event that the first locking member or the second locking member is pushed and rotated by the insert member, the first locking member and the second locking member can rotate together, thereby locking the insert member.

In addition, in order to avoid a problem that both the first locking member and the second locking member cannot rotate to a locked state due to manufacturing or assembly problems, in the present disclosure, the first locking member, the second locking member, or the connecting rod is provided with the compensation slot. In the event that the second locking member and/or the first locking member are pushed and rotated by the insert member moving along the first direction, and the second locking member is rotated to the locked state to be locked with the insert member, the second locking member cannot continue to rotate while the first locking member and the insert member are not locked. However, due to the compensation slot, the first locking member can be driven by the first elastic member to rotate relative to the second locking member, so that the first locking member can further rotate to the locked state to be locked with the insert member. This avoids the problem that the first locking member and the second locking member cannot simultaneously be locked with the insert member due to the fact that the first locking member and the second locking member are not matched, thereby increasing the tolerance range for locking the panels, and preventing the problem of local concentrated stress and looseness of the panels.

Further, in the present disclosure, the first elastic member is provided, which is connected to the first locking member. In the event that the first locking member is in an unlocked state or a locked state, the first locking member can be kept in the unlocked state or the locked state under an action of the first elastic member, avoiding loosening. In the event that the first locking member is pushed by the insert member, a force exerted to the first locking member by the first elastic member switches from driving the first locking member to rotate toward the unlocked state, to driving the first locking member to rotate toward the locked state, so that the structure of the connecting assembly is simplified, and one elastic member can simultaneously play the roles of driving unlocking and locking.

The drawer connecting device and the drawer provided by the present disclosure include the connecting assembly, so that they also possess the technical effects of the connecting assembly.

### BRIEF DESCRIPTION OF THE DRAWINGS

The present disclosure is explained in more detail below with the aid of the drawings. The features shown in the drawings and/or described below are features of the present disclosure as a whole and improve the disclosure accordingly, independently of the specific combination of features.

It should be noted that in different figures, the same reference numerals indicate the same or substantially the same components.
FIG. 1 is a schematic view of a drawer according to a preferred embodiment of the present disclosure;
FIG. 2 is an exploded view of a connecting assembly according to a preferred embodiment of the present disclosure;
FIG. 3 is an enlarged schematic view of Part A in FIG. 2;
FIG. 4 is a schematic view of a first locking member according to a preferred embodiment of the present disclosure;
FIG. 5 is a schematic view of a second locking member according to a preferred embodiment of the present disclosure;
FIG. 6 is a schematic view of a drawer connecting device in an unlocked state according to a preferred embodiment of the present disclosure;
FIG. 7 is a front view of a drawer connecting device in an unlocked state according to a preferred embodiment of the present disclosure;
FIG. 8 is an enlarged schematic view of Part C in FIG. 7;
FIG. 9 is a schematic view of a connecting assembly in a locked state according to a preferred embodiment of the present disclosure;
FIG. 10 is a schematic view of a drawer connecting device in a locked state according to a preferred embodiment of the present disclosure;
FIG. 11 is an enlarged schematic view of Part E in FIG. 10;
FIG. 12 is a schematic diagram illustrating an angle θ according to another embodiment of the present disclosure;
FIG. 13 is an enlarged schematic view of Part F in FIG. 10;
FIG. 14 is an enlarged schematic view of Part B in FIG. 10;
FIG. 15 is a schematic diagram illustrating a compensation distance S according to a preferred embodiment of the present disclosure;
FIG. 16 is a schematic view of a first adjustment nail according to a preferred embodiment of the present disclosure;
FIG. 17 is a schematic view of a drawer connecting device in a locked state according to another embodiment of the present disclosure.

The reference numerals in the drawings are:
100-connecting assembly,
110-base plate, 111-first blocking surface, 112-second blocking surface, 113-groove, 114-third blocking surface, 115-fourth blocking surface,
120-first locking member, 121-first snap slot, 121a-first inner wall, 121b-second inner wall, 121b1-abutment section, 122-first opening, 123-first limiting surface, 124-second limiting surface, 125-first closed end,
130-second locking member, 131-second snap slot, 131a-third inner wall 131b-fourth inner wall, 132-second opening, 133-third limiting surface, 134-fourth limiting surface, 135-unlocking slot, 136-second closed end,
140-connecting rod, 141-first end, 142-second end, 143-compensation slot, 143a-compensation section, 143b-fitting section, 143c-first position, 143d-second position,
150-first elastic member, 160-second elastic member,
170-first limiting portion, 171-first limiting wall, 172-second limiting wall, 173-third limiting wall, 170a-second limiting portion,
181-fixing plate, 181a-adjusting groove, 181b-sliding slot, 182-first adjustment screw, 182a-adjusting protrusion,
190-first shaft, 192-second shaft,
M-first axis, M1-first side, M2-second side, N-second axis, X-first direction, Y-second direction, Z-third direction, U-first reference line, P-second reference line, K-third reference line, V-first connecting line, Q-second connecting line, J-tangent line, R-third axis, T-fourth axis,
200-insert member, 211-first snap-fit block, 212-second snap-fit block, 220-first adjusting mechanism, 231-first insert block, 232-second insert block, 240-connecting member,
300-drawer, 310-side panel, 320-front panel.

### DETAILED DESCRIPTION

The specific embodiments of the present disclosure are described in further detail below with reference to the accompanying drawings and embodiments. The following embodiments are intended to illustrate the present disclosure but are not intended to limit the scope thereof.

First, it should be noted that the terms such as "top", "bottom", "upward", "downward", and other directional terms used herein are defined relative to the orientations in the respective drawings. These terms are relative concepts and may vary depending on the specific position and state of use in which the device is placed. Therefore, these or other directional terms should not be construed as limiting. Furthermore, the term "comprising" does not exclude the presence of other elements or steps, and the indefinite articles "a" or "an" do not exclude a plurality.

Additionally, it should be noted that any individual technical feature described or implied in the embodiments herein, or shown or implied in the drawings, may be combined with other technical features (or their equivalents) to obtain other embodiments of the present disclosure that are not explicitly described herein.

Moreover, it should be understood that the terms "first", "second", and the like are used herein to describe various information, but such information should not be limited by these terms. These terms are only used to distinguish one type of information from another. For example, without departing from the scope of the present disclosure, "first" information may also be referred to as "second" information, and similarly, "second" information may also be referred to as "first" information.

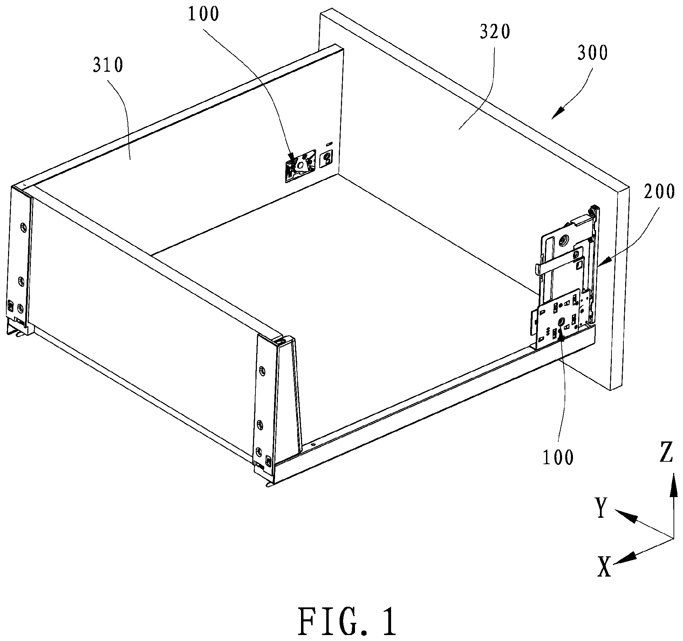

Referring to FIG. 1, this embodiment provides a drawer 300, including a side panel 310, a front panel 320, and a drawer connecting device. The drawer connecting device includes an insert member 200 and a connecting assembly 100, the front panel 320 is connected to the insert member 200, and the side panel 310 is connected to the connecting assembly 100. In an actual assembly of the drawer 300 in the embodiment of the present disclosure, a front-rear direction of the drawer 300 is defined as a first direction X, a left-right direction of the drawer 300 is defined as a second direction Y, and an up-down direction of the drawer 300 is defined as a second direction Y.

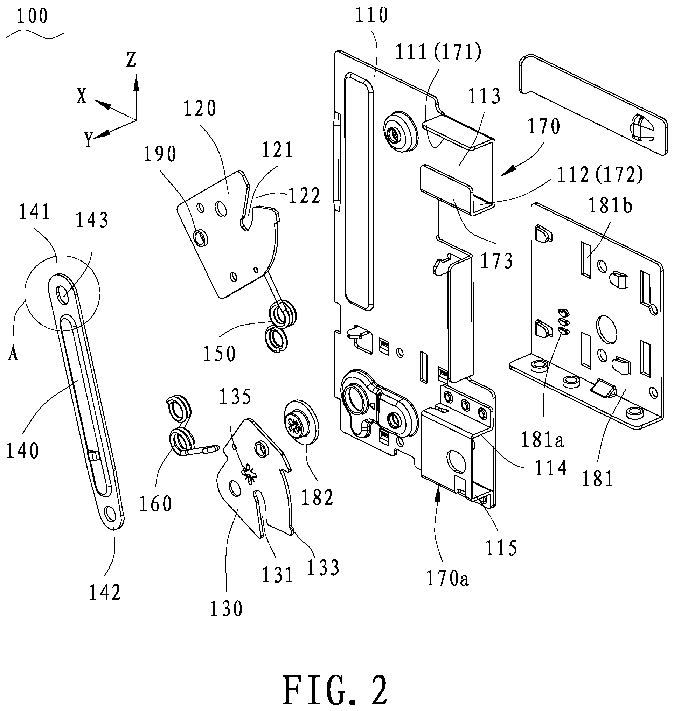

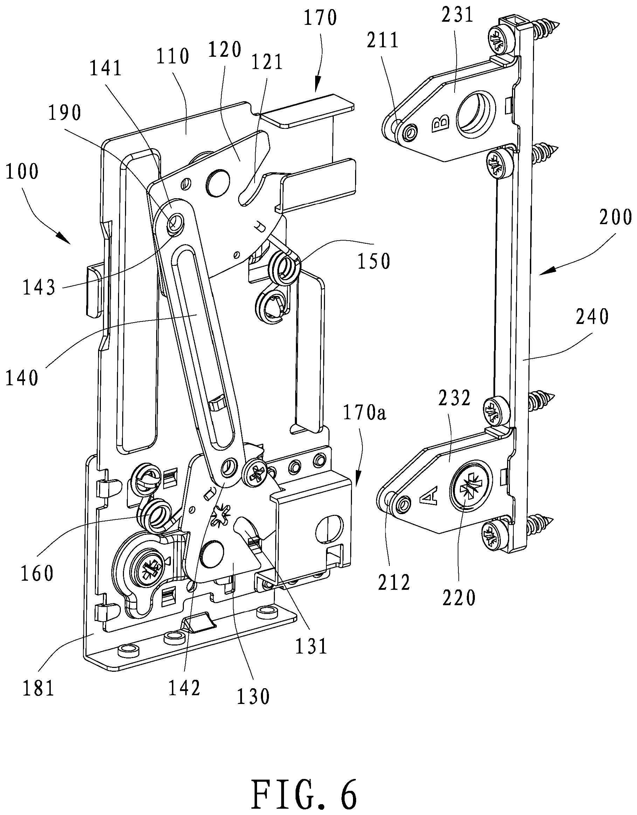

Specifically, referring to FIGS. 2 and 6, the connecting assembly 100 in the present embodiment includes a base plate 110, a first locking member 120, a second locking member 130, a connecting rod 140, and a first elastic member 150. The insert member 200 includes a first insert block 231 engaged with the first locking member 120 and a second insert block 232 engaged with the second locking member 130. The first insert block 231 and the second insert block 232 are connected by a connecting member 240. A first snap-fit block 211 is provided on the first insert block 231, and a second snap-fit block 212 is provided on the second insert block 232.

The first locking member 120 is rotatably connected to the base plate 110 about a first axis M, and the second locking member 130 is rotatably connected to the base plate 110 about a second axis N. The connecting rod 140 includes a first end 141 and a second end 142. The first end 141 is rotatably connected to the first locking member 120, and the second end 142 is rotatably connected to the second locking member 130. One end of the first elastic member 150 is connected to the first locking member 120, and another end of the first elastic member 150 is connected to the base plate 110. The first elastic member 150 is configured to provide a force for rotating the first locking member 120 toward an unlocked state and a locked state. Specifically, in this embodiment, the first elastic member 150 and the first locking member 120 are arranged on the same side of the base plate 110.

Optionally, the first locking member 120, the second locking member 130, or the connecting rod 140 is provided with a compensation slot 143. The compensation slot 143 is configured so that:
in the event that the first locking member 120 and/or the second locking member 130 are pushed by the insert member 200 moving along the first direction X and the second locking member 130 is rotated to the locked state, the first locking member 120 can be rotated to the locked state by means of the compensation slot 143 under an action of the first elastic member 150.

Specifically, the first end 141 of the connecting rod 140 is rotatably connected to the first locking member 120 about the third axis R, and the second end 142 of the connecting rod 140 is rotatably connected to the second locking member 130 about the fourth axis T. It is understandable that:
in the event that the first locking member 120 or the first end 141 is provided with the compensation slot 143, the third axis R is capable of moving along the compensation slot 143 so that the first locking member 120 is rotated to the locked state;
in the event that the second locking member 130 or the second end 142 is provided with the compensation slot 143, the fourth axis T is capable of moving along the compensation slot 143 so that the first locking member 120 is rotated to the locked state.

Furthermore, the first locking member 120 or the first end 141 is provided with the compensation slot 143, the first locking member 120 is rotatably connected to the first end 141 through a first shaft 190, an axis of the first shaft 190 is a third axis R, and the first shaft 190 is inserted into the compensation slot 143. Specifically, in this embodiment, the compensation slot 143 is provided at the first end 141, and the compensation slot 143 extends in a direction from the first end 141 to the second end 142.

In the event that the first locking member 120 and/or the second locking member 130 are pushed and rotated by the insert member 200 moving along the first direction X, the first shaft 190 can be driven via the first elastic member 150 to slide along the compensation slot 143, so that the first locking member 120 is rotated to the locked state. In the event that the insert member 200 is inserted along the first direction X, the insert member 200 may push either the first locking member 120 or the second locking member 130, or both the first locking member 120 and the second locking member 130, thereby the first locking member 120 and/or the second locking member 130 is rotated toward the locking state.

The first locking member 120 and the second locking member 130 are rotatably installed on the base plate 110, and the first locking member 120 and the second locking member 130 are connected through the connecting rod 140, so that in the event that the first locking member 120 or the second locking member 130 is pushed and rotated by the insert member 200, the first locking member 120 and the second locking member 130 can be rotated together to lock the insert member 200.

Finally, in order to avoid a problem that both the first locking member 120 and the second locking member 130 cannot rotate to a locked state due to manufacturing or assembly problems, in the present disclosure, the first locking member 120 or the first end 141 of the connecting rod 140 is provided with the compensation slot 143. In the event that the second locking member 130 and/or the first locking member 120 is pushed and rotated by the insert member 200 moving along the first direction X, and the second locking member 130 is locked with the insert member 200, the second locking member 130 cannot continue rotating while the first locking member 120 and the insert member 200 have not yet locked. At the moment, the first shaft 190 can be driven via the first elastic member 150 to move along the compensation slot 143 toward the second end 142, allowing the first locking member 120 to be further rotated to the locked state and locked with the insert member 200. This avoids the problem that both the first locking member 120 and the second locking member 130 cannot be simultaneously locked with the insert member 200 due to the fact that the first locking member 120 and the second locking member 130 are not matched, thereby increasing the tolerance range of the panels, and preventing the problem of local concentrated stress and looseness of the panels.

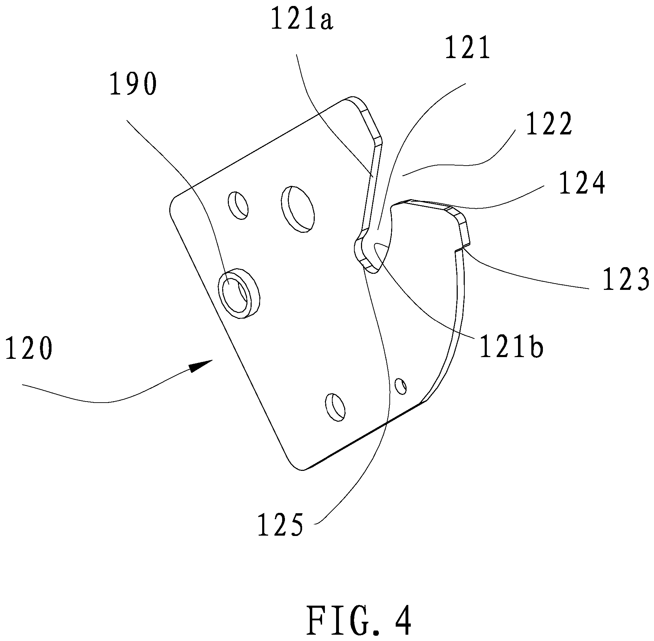

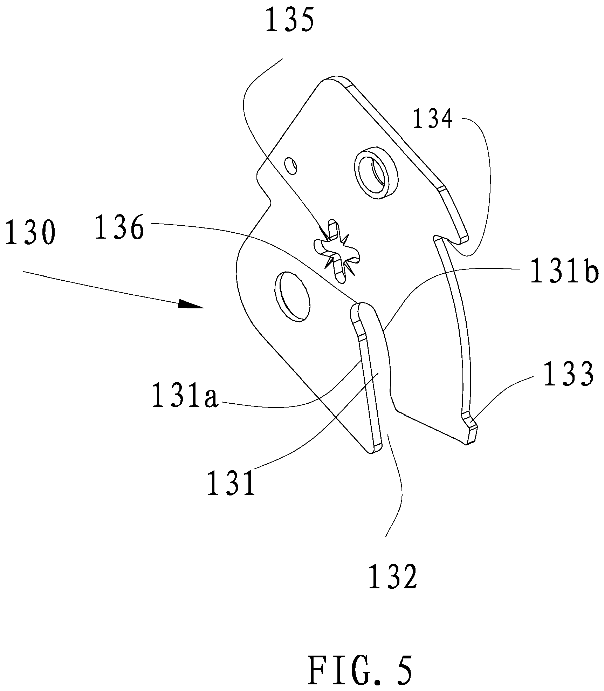

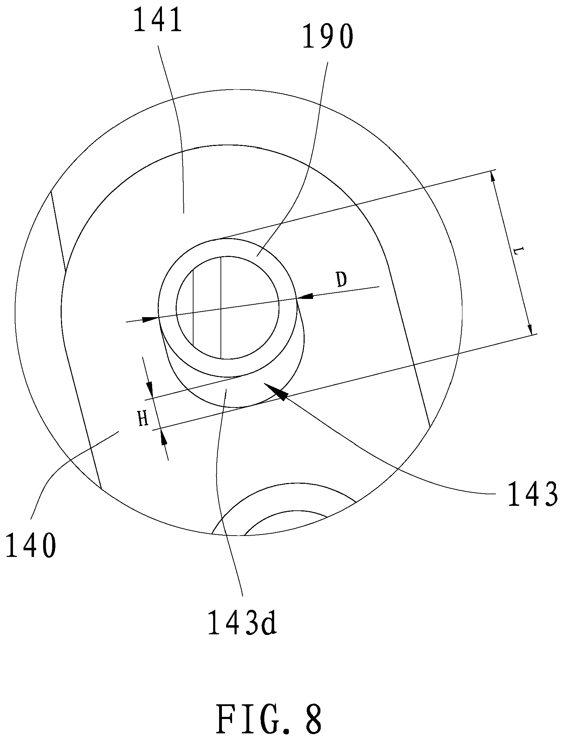

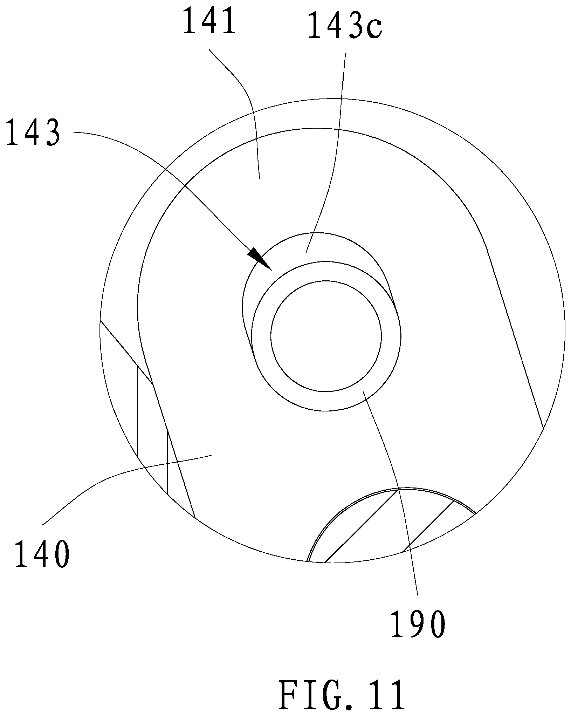

Referring to FIGS. 2-11, in some embodiments, the compensation slot 143 includes a first position 143c and a second position 143d. In the event that the first locking member 120 is rotated from the locked state to the unlocked state, the first elastic member 150 exerts a force on the first locking member 120 towards the unlocked state, so as to drive the first locking member 120 to rotate and further drive the first shaft 190 to slide to the first position 143c. In the event that the first locking member 120 is rotated from the unlocked state to the locked state, the first elastic member 150 exerts a force on the first locking member 120 towards the locked state, so as to drive the first locking member 120 to rotate in an opposite direction and further drive the first shaft 190 to slide to the second position 143d. Through a cooperation of the first elastic member 150, the first shaft 190, the compensation slot 143, the first position 143c, and the second position 143d, the first locking member 120 can further rotate to the locked state after the second locking member 130 is locked, which enables the locking and unlocking actions of the first locking member 120 to be more flexible.

Thus, in the event that the first locking member 120 is in the unlocked state or the locked state, the first locking member 120 can be maintained in the unlocked state or the locked state under an action of the first elastic member 150, preventing loosening between the first locking member 120 and the insert member 200. In the event that the first locking member 120 is pushed by the insert member 200 to rotate from the unlocked state to the locked state, the force exerted on the first locking member 120 by the first elastic member 150 switches from the initial direction for driving the first locking member 120 to rotate toward the unlocked state to a direction for driving the first locking member 120 to rotate toward the locked state, so that the structure of the connecting assembly 100 is simplified, and one elastic member can simultaneously play the roles of driving unlocking and locking.

Specifically, in this embodiment, the compensation slot 143 is located on the first end 141 of the connecting rod 140. Compared to an embodiment in which the compensation slot 143 is located on the first locking member 120, this embodiment can simplify a structure of the first locking member 120, and make installation easier. With an extension direction of the connecting rod 140 as a reference, it is easier to arrange the compensation slot 143. Specifically, the first position 143c and the second position 143d are arranged successively along a length direction of the connecting rod 140. One end of the first shaft 190 is connected to the first locking member 120, and another end protrudes from the compensation slot 143. The second position 143d is closer to the second end 142 than the first position 143c.

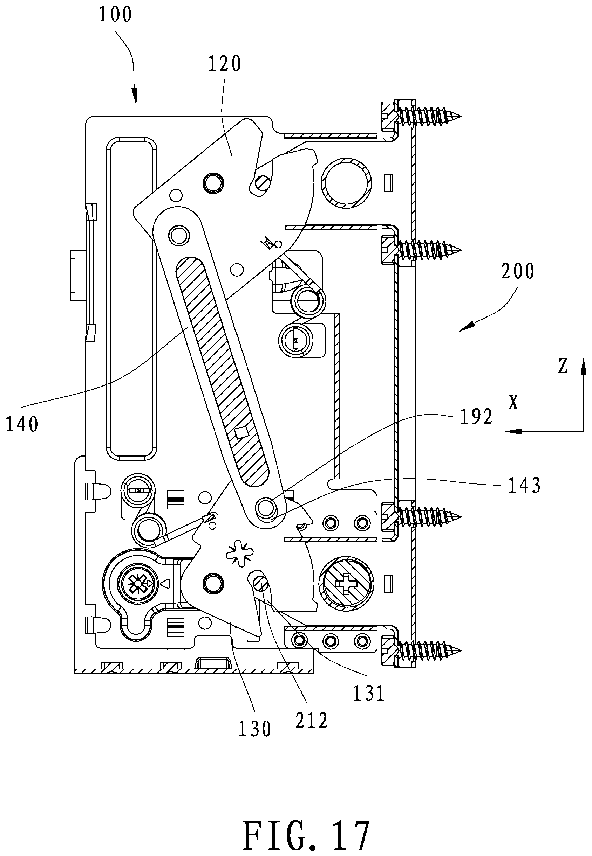

In some other embodiments, the compensation slot 143 may be arranged on the second end 142 of the connecting rod 140 or on the second locking member 130. Referring to FIG. 17, the compensation slot 143 is arranged on the second end 142 of the connecting rod 140. Specifically, the second locking member 130 is rotatably connected to the second end 142 of the connecting rod 140 through the second shaft 192. One end of the second shaft 192 is fixed to the second locking member 130, another end is inserted into the compensation slot 143, and the second shaft 192 can slide along the extension direction of the compensation slot 143.

Further, a maximum distance between the first position 143c and the second position 143d is L mm. In this embodiment, the maximum distance between the first position 143c and the second position 143d is an extended length of the compensation slot 143 along a direction from the first end 141 to the second end 142. A diameter of the first shaft 190 is D mm, the compensation slot 143 has a compensating distance of H mm, and H = L - D, where 0.5 ≤ H ≤ 2, that is 0.5 ≤ L - D ≤ 2. As a result, during the rotation of the first locking member 120 from the unlocked state to the locked state under the driving action of the second locking member 130 via the connecting rod 140, after the second locking member 130 reaches the locked state, the first locking member 120 can rotate by a certain angle by means of the compensation slot 143 to reach the locked state. Specifically, the first shaft 190 slides in the compensation slot 143 from the first position 143c to the second position 143d. Therefore, after the second locking member 130 is rotated to the locked state and the first locking member 120 has not yet reached the locked state, the first locking member 120 can continue to rotate by a certain angle until it reaches the locked state and the first locking member 120 is locked with the insert block 230 of the insert member 200, avoiding the problem where the first locking member 120 and the second locking member 130 cannot be locked simultaneously with the insert member 200 due to manufacturing or assembly inconsistencies.

It should be noted that the first position 143c and the second position 143d are arranged in sequence along the direction from the first end 141 to the second end 142. The first position 143c and the second position 143d can be arranged at any position within the compensation slot 143. In the event that the first locking member 120 rotates to the locked state, the position of the first shaft 190 within the compensation slot 143 is the second position 143d. In the event that the first locking member 120 rotates to the unlocked state, the position of the first shaft 190 within the compensation slot 143 is the first position 143c.

The dimensional relationship among the first position 143c and the second position 143d of the compensation slot 143 and the first shaft 190 is set in such a way that a rotation angle of the first locking member 120 is within a reasonable range. As a result, during the first locking member 120 continues to rotate towards the locked state by means of the compensation slot 143, on one hand, the first locking member 120 can rotate by a sufficient angle to lock with the insert block 230 of the insert member 200, on the other hand, an excessive travel of the first shaft 190 in the compensation slot 143 is avoided, which would otherwise affect the efficiency of the second locking member 130 driving the first locking member 120 to rotate through the connecting rod 140. Preferably, in this embodiment, L-D = 1.

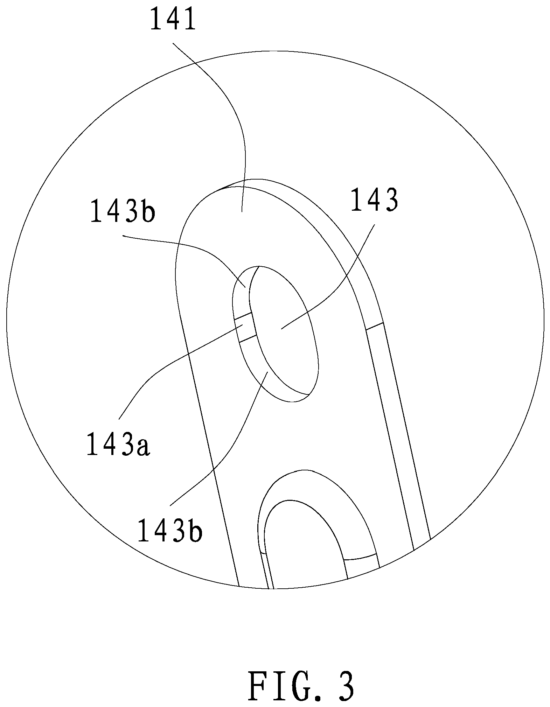

Specifically, referring to FIG. 3, in some embodiments, the inner wall of the compensation slot 143 includes a compensation section 143a and a fitting section 143b, and two ends of the fitting section 143b are respectively connected to two ends of the compensation section 143a. The fitting section 143b is fitted with the outer circumferential surface of the first shaft 190. Preferably, the fitting section 143b is a circular arc line segment, and the compensation section 143a is a circular arc line segment or a straight line segment. In this way, when the first locking member 120 is rotated, the first shaft 190 is rotated about the first axis M, and a rotation track thereof is a circular arc. In the event that the compensation section 143a is a circular arc line segment, the first shaft 190 rotates more smoothly, and the travel is larger than the travel in the case of the straight line segment. It should be noted that, in the event that the second locking member 130 has rotated to the locked state and the first locking member 120 has not yet reached the locked state, there is a gap between the first locking member 120 and the insert member 200, and the gap is small. At this point, the first locking member 120 only needs to continue rotating by a small angle to abut against the insert block 230 of the insert member 200. A gap is usually formed between the first shaft 190 and the inner wall of the compensation slot 143, so the straight line segment of the compensation section 143a also allows the first shaft 190 to slide in the compensation slot 143, so as to enable the first locking member 120 to rotate continuously to achieve locking.

It should be noted that in this embodiment, the first direction X is generally parallel to the drawer's pulling direction. Referring to FIGS. 2, 4, and 5, in order to achieve locking between the insert member 200 and the first locking member 120, in this embodiment, the first locking member 120 is provided with a first snap slot 121, one end of the first snap slot 121 is designed as a first opening 122, and another end is designed as a first closed end 125. Further, in the event that the insert member 200 is inserted in the first direction X and inserted into the first snap slot 121 through the first opening 122, the first snap-fit block 211 is confined in the first snap slot 121, so that the first locking member 120 is locked with the insert member 200. In this embodiment, the second locking member 130 is provided with a second snap slot 131, one end of the second snap slot 131 is designed as a second opening 132, and another end is designed as a second closed end 136. In the event that the insert member 200 is inserted in the first direction X and inserted into the second snap slot 131 through the second opening 132, the second snap-fit block 212 is confined in the second snap slot 131, so that the second locking member 130 is locked with the insert member 200. The first opening 122 and the second opening 132 face away from each other, and both are oriented toward the outside of the base plate 110. As a result, the first locking member 120 and the second locking member 130 rotate in opposite directions during the locking or unlocking process of the first locking member 120 and the second locking member 130, and with the action of the connecting rod 140, the first locking member 120 and the second locking member 130 coordinate with each other and simultaneously rotate toward the unlocked state or locked state during the unlocking or locking process of the first locking member 120 and the second locking member 130.

In some embodiments, the first elastic member 150 is arranged between the first locking member 120 and the second locking member 130, and the connection point between the first elastic member 150 and the first locking member 120 is located between the first shaft 190 and the first snap slot 121. The first elastic member 150 is arranged at such a position that the first locking member 120 can better coordinate with the second locking member 130 to achieve the locked or unlocked state. Specifically, in the event that the first locking member 120 and/or the second locking member 130 is pushed by the insert member 200 and rotated toward the locked state, in an initial stage of rotation of the first locking member 120, the first elastic member 150 exerts a force on the first locking member 120 to drive the first locking member 120 to rotate toward the unlocked state, and at this moment, the first shaft 190 is positioned at the first position 143c and rotates synchronously with the second locking member 130. After the second locking member 130 is rotated to the locked state, a direction of the force exerted by the first elastic member 150 changes, and the force exerted by the first elastic member 150 on the first locking member 120 rotates the first locking member 120 toward the locked state. As a result, the first locking member 120 continues to rotate, causing the first shaft 190 to slide to the second position 143d, and the first locking member 120 rotates to the locked state. In addition, in the case of unlocking, during the second locking member 130 rotates toward the unlocked state and drives the first locking member 120 via the connecting rod 140 to rotate toward the unlocked state, in an initial stage of the rotation of the first locking member 120 toward the unlocked state, the first elastic member 150 exerts a force on the first locking member 120 to rotate the first locking member 120 toward the locked state, and at this time, the first shaft 190 is located at the second position 143d. Upon the first locking member 120 rotating toward the unlocked state to a certain angle, the direction of the force exerted by the first elastic member 150 on the first locking member 120 changes, and the force exerted by the first elastic member 150 on the first locking member 120 rotate the first locking member 120 toward the unlocked state, causing the first shaft 190 to slide to the first position 143c, so that the first locking member 120 rotates to the unlocked state.

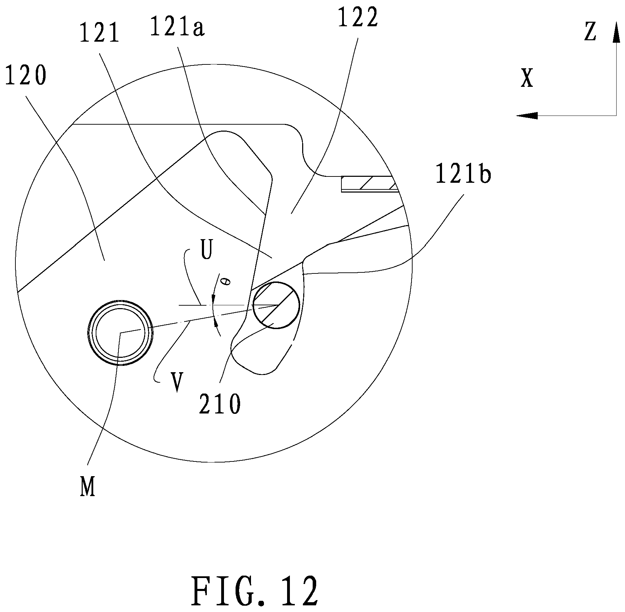

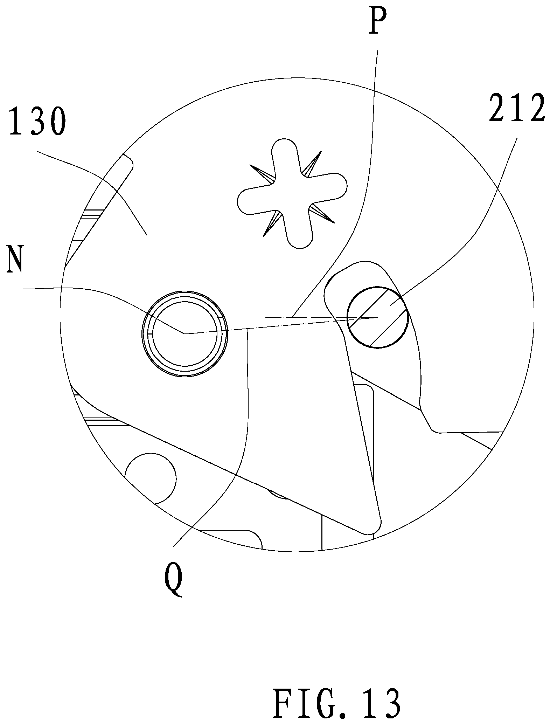

Specifically, referring to FIG. 2 and FIGS. 4 to 13, in some embodiments, the first snap slot 121 sequentially includes a first inner wall 121a and a second inner wall 121b opposite each other, arranged away from the first axis M. In the event that the first snap-fit block 211 of the insert member 200 is inserted between the first inner wall 121a and the second inner wall 121b, the first locking member 120 is in the locked state. Preferably, the second inner wall 121b extends around the first axis M, and a distance from the second inner wall 121b to the first axis M is constant or gradually increases in the extension direction of the second inner wall 121b toward the first opening 122. The distance from the second inner wall 121b to the first axis M in the extension direction of the second inner wall 121b toward the first opening 122 gradually increases, thereby allowing adjustment of the assembly clearance between the insert member 200 and the first locking member 120.

In some embodiments, the second snap slot 131 is sequentially provided with a third inner wall 131a and a fourth inner wall 131b opposite each other arranged away from the second axis N. In the event that the insert member 200 is inserted between the third inner wall 131a and the fourth inner wall 131b, the second locking member 130 is in the locked state. Preferably, the fourth inner wall 131b extends from the second closed end 136 to the second opening 132 of the second snap slot 131, and a distance between the fourth inner wall 131b and the second axis N along the extension direction of the fourth inner wall 131b is constant or gradually increases. In the extension direction of the fourth inner wall 131b, the distance between the fourth inner wall 131b and the second axis N gradually increases, thereby allowing adjustment of the assembly clearance between the insert member 200 and the second locking member 130.

It should be noted that the shape of the third inner wall 131a may be the same as or different from the shape of the first inner wall 121a, and the shape of the fourth inner wall 131b may be the same as or different from the shape of the second inner wall 121b. Some preferred shapes of the first inner wall 121a and the second inner wall 121b are listed below, the shape of the third inner wall 131a may be the same as the shape of the first inner wall 121a, and the shape of the fourth inner wall 131b may be the same as the shape of the second inner wall 121b. Therefore, detailed descriptions of the specific shapes of the third inner wall 131a and the fourth inner wall 131b will not be provided.

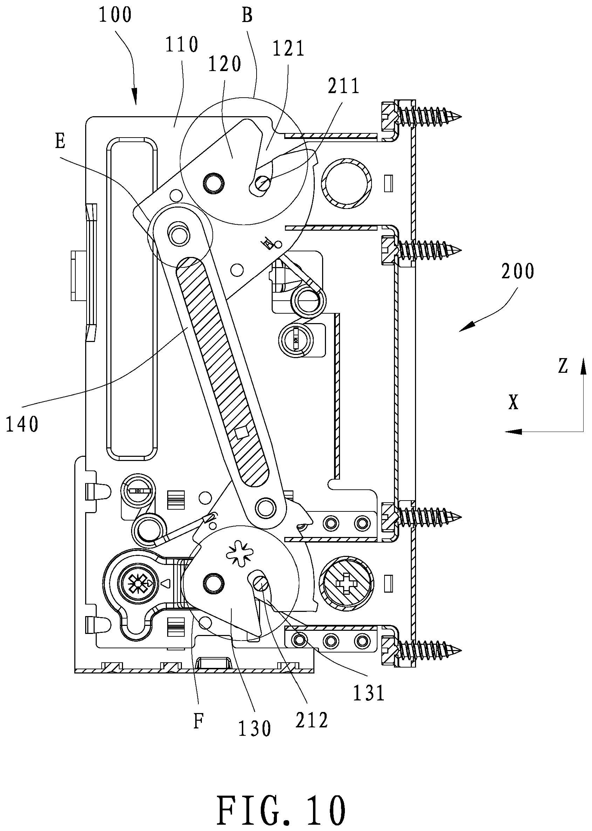

Specifically, referring to FIG. 10, in some embodiments, an extension trajectory of the second inner wall 121b follows an asymptotic trajectory extending around the first axis M, so that during the insertion of the insert member 200 in the first direction X, as the first locking member 120 rotates, the insert member 200 gradually approaches the first axis M, thereby allowing the front panel 320 and the side panel 310 to gradually approach and press against each other during the connection process of the panel 320 and the side panel 310 via the insert member 200 and the connecting assembly 100, and avoiding a gap between the front panel 320 and the side panel 310 after connection.

In some other embodiments, the extension trajectory of the second inner wall 121b may be a circular arc trajectory, an involute trajectory, or an Archimedean spiral trajectory. In the event that the extension trajectory of the second inner wall 121b is a circular arc trajectory, preferably, a center of the circular arc trajectory is eccentrically arranged relative to the first axis M, so that the distance between the second inner wall 121b following the circular arc trajectory and the first axis M gradually increases in the extension direction of the second inner wall 121b toward the first opening 122.

Further, in some embodiments, the first inner wall 121a extends from the first closed end 125 of the first snap slot 121 to the first opening. In the extension direction of the first inner wall 121a, the distance between the first inner wall 121a and the first axis M gradually increases. Specifically, in this embodiment, the first inner wall 121a is an inclined straight line gradually moving away from the first axis M. In this way, in the event that the insert member 200 is inserted in the first direction X, the first snap-fit block 211 of the insert member 200 abuts against and pushes the first inner wall 121a, thereby driving the first locking member 120 to rotate. In the event that the first locking member 120 rotates to a predetermined position, the direction of the force exerted by the first elastic member 150 to drive the first locking member 120 to rotate changes from facing the first side M1 of the first axis M to facing the second side M2 of the first axis M. At this time, the first elastic member 150, which originally drove the first locking member 120 to rotate toward the unlocked state, instead drives the first locking member 120 to rotate toward the locked state, thereby driving the first locking member 120 to rotate to the locked state and bringing the second inner wall 121b into abutment with the insert member 200. In some other embodiments, the first inner wall 121a may be a circular arc line gradually moving away from the first axis M.

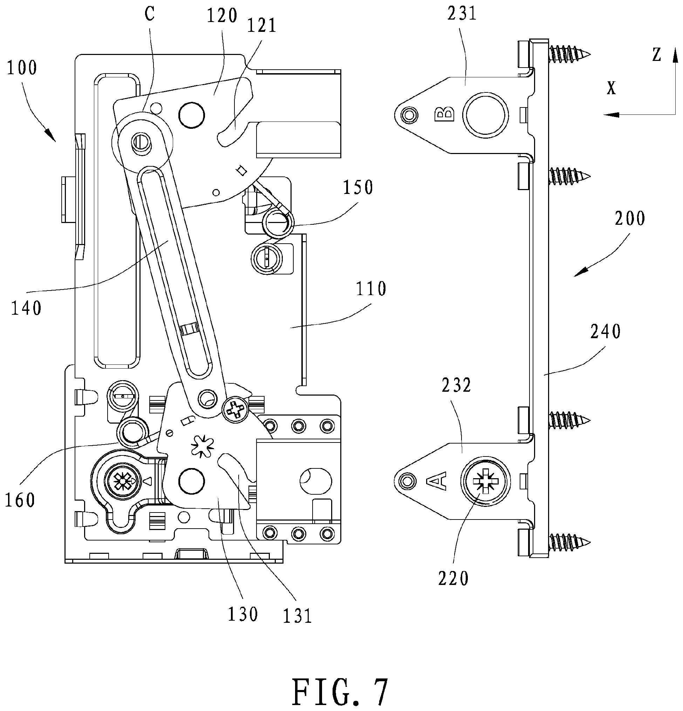

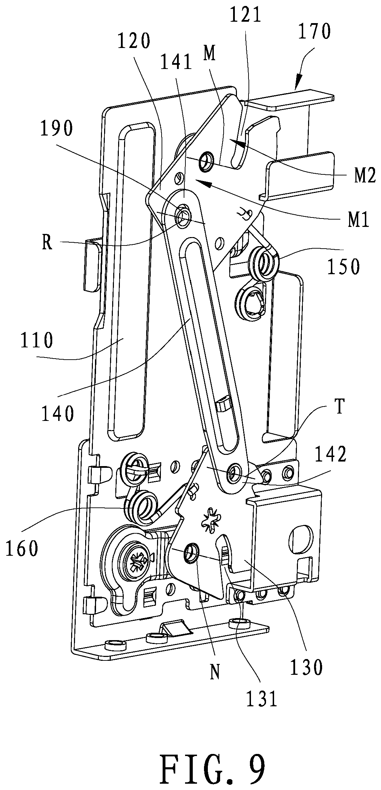

It should be noted that, referring to FIGS. 6 and 7, in the event that the first locking member 120 is in the unlocked state, the direction of the force exerted by the first elastic member 150 on the first locking member 120 faces the first side M1 of the first axis M. Referring to FIGS. 9 and 10, in the event that the first locking member 120 is in the locked state, the direction of the force exerted by the first elastic member 150 on the first locking member 120 faces the second side M2 of the first axis M.

Referring to FIG. 9, two opposite sides of the first axis M are respectively the first side M1 and the second side M2. Specifically, the first side M1 is the side of the first axis M facing the connecting rod 140, and the second side M2 is the side of the first axis M facing away from the connecting rod 140.

Referring to FIG. 1, in some embodiments, during the connection of the front panel 320 and the side panel 310 via the insert member 200 and the connecting assembly 100, the front panel 320 gradually approaches the side panel 310 and ultimately abuts tightly against the side panel 310. After the front panel 320 abuts tightly against the side panel 310, the front panel 320 cannot move relative to the side panel 310 in the first direction X. At this time, the second inner wall 121b abuts against the first snap-fit block 211.

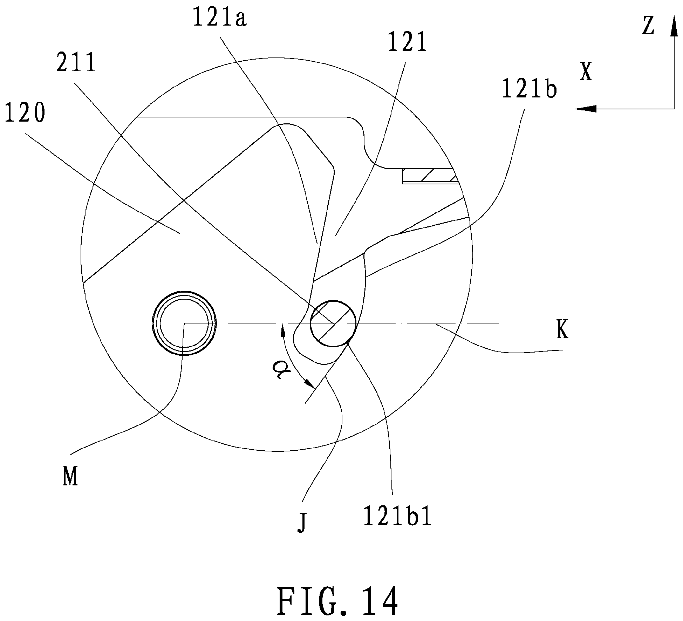

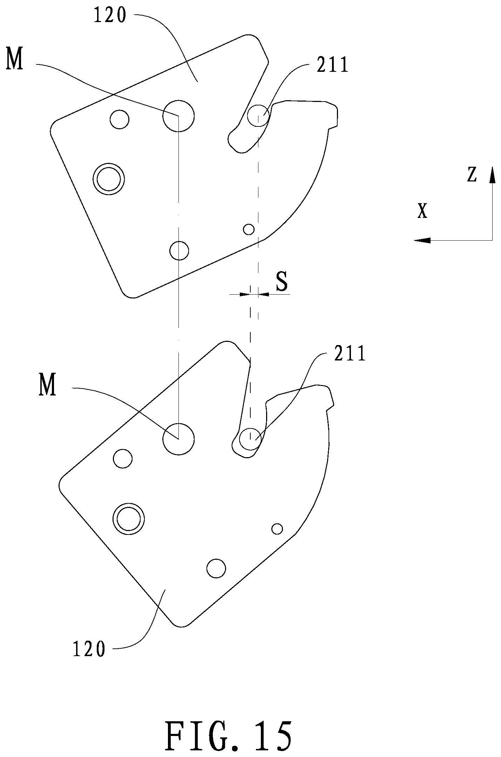

Furthermore, referring to FIGS. 9-15, taking the engagement between the first locking member 120 and the insert member 200 as an example, as a distance between the abutment section 121b1 and the first axis M gradually increases, a compensation distance S for adjusting the assembly clearance between the insert member 200 and the first locking member 120 can be formed. During drawer installation, adjusting this compensation distance allows adjustment of the distance between the front panel 320 and the side panel 310, thereby compensating for manufacturing or assembly tolerances between the front panel 320 and the side panel 310, so that the front panel 320 and the side panel 310 are tightly connected without a gap.

Specifically, as the first locking member 120 rotates toward the locked state, the distance between the abutment point of the insert member 200 and the first locking member 120 and the first axis M gradually decreases, thereby causing the insert member 200 to gradually approach the first axis M. Consequently, the front panel 320 and the side panel 310, which are correspondingly connected via the insert member 200 and the first locking member 120, gradually draw closer, reducing the gap between the front panel 320 and the side panel 310 and eliminating fit errors. In the event that the gap to be adjusted between the front panel 320 and the side panel 310 is relatively small, the first snap-fit block 211 moves to a middle of the first snap slot 121 or to an upper portion near the first opening, and abuts against the first inner wall 121a, thereby achieving locking between the front panel 320 and the side panel 310. In the event that the gap to be adjusted between the front panel 320 and the side panel 310 is relatively large, the first snap-fit block 211 needs to move to a lower middle portion of the first snap slot 121 or to the first closed end 125, and abut against the first inner wall 121a, thereby achieving locking between the front panel 320 and the side panel 310.

Specifically, the compensation distance S cannot be too large or too small. If it is too small, it cannot accommodate the adjustment of the assembly tolerances between the front panel 320 and the side panel 310. If it is too large, the size of the first locking member 120 becomes larger, increasing its own weight, which in turn increases the load on the first elastic member 150, affecting the service life of the first elastic member 150, and making the structural arrangement unreasonable. Therefore, preferably, 1.5 mm ≤ S ≤ 4 mm, which is sufficient to compensate for the assembly tolerances between the front panel 320 and the side panel 310 without increasing the load on the first elastic member 150. More preferably, 2 mm ≤ S ≤ 3 mm.

Furthermore, referring to FIGS. 10-13, in the event that the first locking member 120 and the second locking member 130 are in the locked state, a line passing through a center of the first snap-fit block 211 and extending along the first direction X is defined as a first reference line U, and a line passing through the center of the first snap-fit block 211 and perpendicularly intersecting the first axis M is defined as a first connecting line V;
a line passing through a center of the second snap-fit block 212 and extending along the first direction X is defined as a second reference line P, and a line passing through the center of the second snap-fit block 212 and perpendicularly intersecting the second axis N is defined as a second connecting line Q;
an angle formed between the first connecting line V and the first reference line U, or between the second connecting line Q and the second reference line P, is θ, where 0° ≤ θ ≤ θₖ, and θₖ is a critical angle at which the first locking member 120 or the second locking member 130 remains in the locked state with the insert member 200 and the insert member 200 cannot be withdrawn from the first locking member 120 or the second locking member 130.

Specifically, taking the engagement between the first locking member 120 and the insert member 200 as an example for explanation, in the event that the first locking member 120 and the insert member 200 are in the locked state, the line passing through a center of the first snap-fit block 211 and extending along the first direction X is defined as the first reference line U, and the line passing through the center of the first snap-fit block 211 and perpendicularly intersecting the first axis M is defined as the first connecting line V. The angle formed between the first connecting line V and the first reference line U is 0, where 0° ≤ θ ≤ θₖ, and θₖ is the critical angle at which the first locking member 120 remains in the locked state with the insert member 200, and the insert member 200 cannot be withdrawn from the first locking member 120. At this time, when the insert member 200 is pulled in a direction opposite to the first direction X, the force exerted by the insert member 200 on the first locking member 120 has a component that tends to rotate the first locking member 120 toward the unlocked state. This component is relatively small and cannot overcome the inertia of the first locking member 120 itself and/or the elastic force of the first elastic member 150 driving the first locking member 120 to rotate toward the locked state. Consequently, the first locking member 120 cannot be driven to rotate toward the unlocked state, and the insert member 200 cannot be withdrawn from the first snap slot 121 of the first locking member 120. This allows the first locking member 120 to remain in the locked state without the need for bolts or other limiting members.

The angle θ between the first connecting line V and the first reference line U cannot be too large. The closer θ is to 0°, the smaller the force exerted by the insert member 200 on the first locking member 120 in the rotational direction, which is more favorable for maintaining the locked state of between the insert member 200 and the first locking member 120. Preferably, θ = 0°, and the first connecting line V coincides with the first reference line U. In this case, the locked state between the insert member 200 and the first locking member 120 is the most stable. It should be noted that even if the first connecting line V does not coincide with the first reference line U, under an action of the elastic force exerted by the first elastic member 150 on the first locking member 120, or under an inertia of the first locking member 120 itself, the locked state between the insert member 200 and the first locking member 120 can still be maintained, such that the insert member 200 cannot be withdrawn from the first locking member 120. In this case, θₖ is a relatively small angle, generally not exceeding 15°.

Specifically, referring to FIGS. 10, 11, and 14, a line extending in the first direction X and perpendicularly intersecting the first axis M is defined as a third reference line K. In some embodiments, a tangent line J of the abutment section 121b1 at any point forms an included angle α with the third reference line K, where 50° ≤ α ≤ 90°. This arrangement brings a rotation axis of the first locking member 120 close to the third reference line K. The first snap-fit block 211 and the rotation axis of the first locking member 120 are substantially arranged one behind the other along the first direction X, so that in the locked state, the interaction forces between the insert member 200 and the first locking member 120 cancel each other out, making it easier to achieve a force balance state. This makes the locked state between the first locking member 120 and the insert member 200 more stable and the structure more compact. The closer α is to 90°, the closer the force exerted by the insert member 200 on the first locking member 120 in the rotational direction is to zero. In this case, even without the action of the first elastic member 150, a force balance state can be achieved between the first locking member 120 and the insert member 200, such that the first locking member 120 cannot rotate toward the unlocked state and the first snap-fit block 211 cannot be withdrawn from the first snap slot 121.

In the event that the insert member 200 is pulled, if the force exerted by the insert member 200 on the first locking member 120 in the rotational direction is relatively small, the elastic force of the first elastic member 150 can be used to counteract the force exerted by the insert member 200 on the first locking member 120 in the rotational direction, thereby maintaining the locked state of the first locking member 120. Specifically, in the event that the first locking member 120 and the insert member 200 reach the locked state, the first elastic member 150 exerts an elastic force on the first locking member 120 driving it to rotate toward the locked state. This elastic force counteracts the force transmitted from the insert member 200 to the first locking member 120 driving it to rotate toward the unlocked state. As a result, pulling the insert member 200 does not cause the first locking member 120 to rotate, thereby ensuring that in the event that the front panel 320 is pulled, the front panel 320 does not become loose, preventing the front panel 320 from detaching from the side panel 310. This improves user experience and ensures safe and reliable drawer operation.

In addition, the engagement between the second locking member 130 and the insert member 200 is similar to that between the first locking member 120 and the insert member 200, and will not be repeated here.

Referring to FIGS. 2, 6, 7, 9 and 10, in some embodiments, the first elastic member 150 is a torsion spring. The torsion spring includes a spring body, a first torque arm, and a second torque arm. Both the first torque arm and the second torque arm are provided on the spring body. The first torque arm is connected to the base plate 110, and the second torque arm is connected to the first locking member 120. That is, the first elastic member 150 can be implemented as a torsion spring. The torsion spring provides an outward expanding elastic force, which drives the first locking member 120 to rotate toward the locked state, so that the first snap slot 121 of the first locking member 120 engages the first snap-fit block 211 to achieve the locked state. In some other embodiments, the first elastic member 150 may also be a compression spring, an extension spring, or the like.

In some embodiments, referring to FIGS. 2, 4 and 5, to limit the rotation range of the first locking member 120, the first locking member 120 is provided with a first limiting surface 123 and a second limiting surface 124, and the base plate 110 is provided with a first blocking surface 111 and a second blocking surface 112.

In the event that the first limiting surface 123 abuts against the first blocking surface 111, the first locking member 120 is in the unlocked state. The first locking member 120 can abut against and stop the first blocking surface 111 to maintain the unlocked state.

In the event that the second limiting surface 124 abuts against the second blocking surface 112, the first locking member 120 is in the locked state. It should be noted that in the event that the first locking member 120 is in the locked state, the second limiting surface 124 does not necessarily abut against the second blocking surface 112. The locking function may be achieved before the second limiting surface 124 reaches the abutment position with the second blocking surface 112.

In some embodiments, referring to FIGS. 2, 4 and 5, to limit the rotation range of the second locking member 130, the second locking member 130 is provided with a third limiting surface 133 and a fourth limiting surface 134, and the base plate 110 is provided with a third blocking surface 114 and a fourth blocking surface 115.

In the event that the third limiting surface 133 abuts against the third blocking surface 114, the second locking member 130 is in the unlocked state. The second locking member 130 can abut against and stop the third blocking surface 114 to maintain the unlocked state.

In the event that the fourth limiting surface 134 abuts against the fourth blocking surface 115, the second locking member 130 is in the locked state. It should be noted that in the event that the second locking member 130 is in the locked state, the fourth limiting surface 134 does not necessarily abut against the fourth blocking surface 115. The locking function may be achieved before the fourth limiting surface 134 reaches the abutment position with the fourth blocking surface 115 during the rotation of the second locking member 130 toward the locked state.

Referring to FIG. 2, further, in this embodiment, the connecting assembly 100 is provided with a first limiting portion 170 and a second limiting portion 170a for limiting the insertion of the insert member 200 in the first direction X. The first limiting portion 170 is provided at a side of the first locking member 120 in the first direction X, and the second limiting portion 170a is provided at a side of the second locking member 130 in the first direction X. This prevents the insert member 200 from moving in the second direction Y or the third direction Z during insertion in the first direction X, where the first direction X, the second direction Y, and the third direction Z are mutually perpendicular.

It should be noted that the first limiting portion 170 and the second limiting portion 170a may be the same or different. The structure of the first limiting portion 170 is exemplified below, and the second limiting portion 170a may be identical thereto and will not be described in detail.

Specifically, in this embodiment, the first limiting portion 170 includes a first limiting wall 171 and a second limiting wall 172 extending in the first direction X and arranged opposite each other in the third direction Z. The first limiting wall 171 and the second limiting wall 172 are configured to limit the insertion of the insert member 200 in the first direction X. A groove 113 is formed between the first limiting wall 171 and the second limiting wall 172, and the insert member 200 can pass into the groove 113. It should be noted that in this embodiment, the first limiting wall 171 is formed with the first blocking surface 111, and the second limiting wall 172 is formed with the second blocking surface 112.

Specifically, in this embodiment, the first limiting wall 171 and the second limiting wall 172 are arranged on the base plate 110.

It will be understood that the first limiting portion 170 may further be provided with a third limiting wall 173 in the second direction Y, so as to block the insert member 200 from moving in the second direction Y during the movement of the insert member 200 in the first direction X.

Referring to FIGS. 2 and 6, in some embodiments, the insert member 200 is provided with two first adjusting members 220. The two first adjusting members 220 are respectively provided on the first insert block 231 and the second insert block 232. One of the first adjusting members 220 cooperates with the third limiting wall 173, and the first adjusting member 220 are configured to adjust, after the first insert block 231 is inserted into the slot 113 of the first limiting portion 170 or the second insert block 232 is inserted into the second limiting portion 170a, the position of the first insert block 231 or the second insert block 232 relative to the groove 113 in the second direction Y. Specifically, in this embodiment, the first adjusting member 220 is a bolt threadedly connected to the insert block 230. In the event that there is a gap between the first insert block 231 and the third limiting wall 173 of the first limiting portion 170 or the second insert block 232 and the second limiting portion 170a, causing the front panel 320 to be loose relative to the side panel 310 in the second direction Y, the first adjusting member 220 can be adjusted so that the first adjusting member 220 abuts against the third limiting wall 173 in the third direction Z.

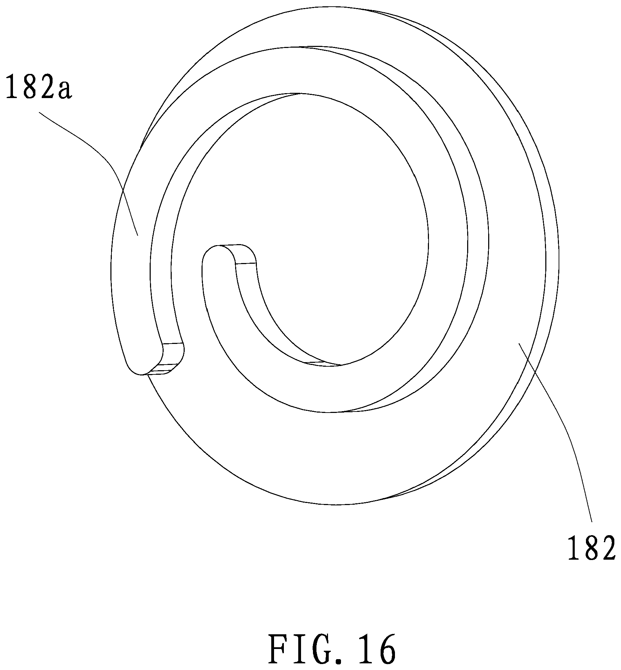

Referring to FIGS. 2 and 16, further, in this embodiment, the connecting assembly further includes a fixing plate 181 and a second adjusting member. The base plate 110 is connected to the fixing plate 181 and is slidable relative thereto in the third direction Z. The second adjusting member is connected to the fixing plate 181 and the base plate 110, and the second adjusting member is configured to adjust the relative position between the base plate 110 and the fixing plate 181. The second adjusting member is capable of adjusting the relative position between the base plate 110 and the fixing plate 181. The connecting assembly 100 is connected to a panel to be connected (e.g., the side panel 310 of a drawer) via the fixing plate 181, so that the relative position between the connecting assembly 100 and the side panel 310 in the third direction Z can be adjusted by the second adjusting member.

Specifically, the fixing plate 181 is provided with a plurality of adjusting grooves 181a. The second adjusting member may be configured as a first adjustment screw 182 rotatably connected to the base plate 110. The first adjustment screw 182 is provided with a spiral adjusting protrusion 182a. The plurality of adjusting grooves 181a are arranged in sequence along the third direction Z. The adjusting protrusion 182a can extend into the adjusting grooves 181a. By rotating the first adjustment screw 182, the relative position between the fixing plate 181 and the base plate 110 in the third direction Z can be adjusted, thereby adjusting the relative position between the fixing plate 181 and the insert member 200 in the third direction Z. In some other embodiments, the second adjusting member may also be configured as another adjustment structure such as an eccentric rivet to adjust the relative position between the base plate 110 and the fixing plate 181. The fixing plate 181 is provided with a sliding slot 181b, and the base plate 110 is slidably on the fixing plate 181 by means of the sliding slot 181b.

Referring to FIGS. 2-15, based on the structure of the first locking member 120 described above, in this embodiment, in order to enable the insert member 200 to be inserted in the first direction X and locked together with the first locking member 120 and the second locking member 130, and to allow the insert member 200 to be at a plurality of locking positions, the structure of the second locking member 130 provided in this embodiment may be the same as or different from that of the first locking member 120 described above. In addition, the first locking member 120 and the second locking member 130 may also adopt other locking structures, as long as they can lock and unlock with the insert member 200.

Similarly, in order to achieve the connection between the insert member 200 and the first locking member 120 and the second locking member 130, after the insert member 200 is inserted into the groove 113, the first snap-fit block 211 and the second snap-fit block 212 respectively lock with the first locking member 120 and the second locking member 130.

In some embodiments, further, the second locking member 130 is connected to a second elastic member 160. One end of the second elastic member 160 is connected to the second locking member 130, and another end of the second elastic member 160 is connected to the base plate 110. The second elastic member 160 can provide a force for rotating the second locking member 130 toward the unlocked state or the locked state. This eliminates the need for multiple elastic members or additional limiting members cooperating with the locking member, thereby simplifying the structure. A single elastic member can simultaneously drive the second locking member 130 to rotate toward the unlocked state or the locked state.

In some embodiments, preferably, the first elastic member 150 and the second elastic member 160 are respectively located at two sides of the connecting rod 140. The first elastic member 150 and the second elastic member 160 cooperate to achieve unlocking and locking of the first locking member 120 and the second locking member 130. Under the cooperative of the first elastic member 150 and the second elastic member 160, the rotation of the first locking member 120 and the second locking member 130 is more coordinated. Specifically: in the unlocked state, the first elastic member 150 exerts a pushing force on the first locking member 120 to rotate the first locking member 120 toward the unlocked state, and the second elastic member 160 exerts a pulling force on the second locking member 130 to rotate the second elastic member 160 toward the unlocked state. In the locked state, the first elastic member 150 exerts a pulling force on the first locking member 120 to rotate the first locking member 120 toward the locked state, and the second elastic member 160 exerts a pushing force on the second locking member 130 to rotate the second locking member 130 toward the locked state.

In addition, the first locking member 120 or the second locking member 130 is provided with an unlocking slot 135 for a screwdriver. By inserting a screwdriver into the unlocking slot 135 and rotating the first locking member 120 or the second locking member 130 toward the unlocked state, under the driving of the connecting rod 140, the first locking member 120 and the second locking member 130 can be unlocked. Preferably, in this embodiment, the unlocking slot 135 is provided on the second locking member 130.

In some other embodiments, a third locking member may also be included. It will be appreciated that at least two locking members are provided. Generally, the at least two locking members may be arranged in sequence along one direction, for example, along the height direction of the side panel, so as to avoid the situation where one or two locking members cannot tightly fix the side panel to the front panel in the event that the side panel is relatively high. Moreover, the at least two locking members may be connected via a connecting rod or other transmission members, so that in the event that the insert member pushes against the locking members during insertion, the at least two locking members can rotate synchronously to lock the insert member.

In summary, referring to FIGS. 1 to 16, the working principle of the drawer 300, the drawer connecting device, and the connecting assembly 100 provided in this embodiment is as follows.

First, the insert member 200 is connected to the front panel 320 of the drawer, and the connecting assembly 100 is connected to the side panel 310 of the drawer. During assembly of the front panel 320 and the side panel 310, a side of the front panel 320 to which the insert member 200 is connected faces the side panel 310 and moves close to the side panel 310, so that the insert member 200 aligns with the groove 113 and is inserted in the first direction X.

Before the insert member 200 is inserted into the connecting assembly 100, the first locking member 120 and the second locking member 130 are still in the unlocked state. The first elastic member 150 and the second elastic member 160 respectively exert forces on the first locking member 120 and the second locking member 130 to rotate them toward the unlocked state. The first opening 122 and the second opening 132 both face the insert member 200. The first snap-fit block 211 can pass through the first opening 122 to push against the first inner wall 121a of the first snap slot 121, and the second snap-fit block 212 can pass through the second opening 132 to push against the third inner wall 131a of the second snap slot 131. Under the pushing force of the insert member 200 and the action of the connecting rod 140, the first locking member 120 and the second locking member 130 can rotate simultaneously from the unlocked state to the locked state.

During the rotation of the first locking member 120 toward the locked state (the force situation of the second locking member 130 during the rotation of the second locking member 130 is the same as that of the first locking member 120, therefore, the first locking member 120 is taken as an example here, and the second locking member 130 will not be described in detail), since the position where the first elastic member 150 is connected to the first locking member 120 rotates with the first locking member 120, the direction of the force exerted by the first elastic member 150 on the first locking member 120 gradually changes. Specifically, the direction of the force exerted by the first elastic member 150 on the first locking member 120 gradually changes from facing the first side M1 of the first axis M in the unlocked state to facing the second side M2 of the first axis M in the locked state.

Finally, under the action of the first elastic member 150 and the second elastic member 160, the first locking member 120 and the second locking member 130 rotate toward the locked state, so that the second inner wall 121b of the first snap slot 121 abuts against the first snap-fit block 211, and the fourth inner wall 131b of the second snap slot 131 abuts against the second snap-fit block 212. Under the abutting action of the second inner wall 121b and the fourth inner wall 131b on the insert member 200, the force exerted by the insert member 200 on the second inner wall 121b (a direction of the force being opposite to the first direction X) has a relatively small component in the direction that drives the first locking member 120 to rotate, and the force exerted by the insert member 200 on the fourth inner wall 131b (a direction of the force being opposite to the first direction X) also has a relatively small component in the direction that drives the second locking member 130 to rotate. These small components cannot overcome the elastic forces of the first elastic member 150 and the second elastic member 160 and the inertia of the first locking member 120 and the second locking member 130, thereby achieving self-locking between the first locking member 120 and the second locking member 130 and the insert member 200.

In addition, due to inconsistent fit during manufacturing or assembly of the first locking member 120 and the second locking member 130, it is prone to causing the first locking member 120 and the second locking member 130 to fail to lock the insert the insert 200 simultaneously during their rotation towards the locking state. For example, after the fourth inner wall 131b abuts against the second snap-fit block 212, the second locking member 130 is in the locked state and cannot rotate further, while the first locking member 120 is not yet locked with the first snap-fit block 211, resulting in a gap between the front panel 320 and the side panel 310 and causing looseness. Therefore, in this embodiment, the compensation slot 143 is provided. After the second locking member 130 reaches the locked state, the first locking member 120 can, by means of the compensation slot 143, continue to rotate toward the locked state without being restricted by the connecting rod mechanism formed by the connecting rod 140 and the second locking member 130. When the first shaft 190 slides to the second position 143d, the second inner wall 121b can abut against the first snap-fit block 211, so that the first locking member 120 reaches the locked state, thereby achieving a stable snap-fit connection between the insert member 200 and the connecting assembly 100.

In the event that unlocking is required, a screwdriver is inserted into the unlocking slot 135, and the second locking member 130 is rotated toward the unlocked state. Under the driving of the connecting rod 140, the first locking member 120 is simultaneously driven to rotate toward the unlocked state. After the second locking member 130 rotates to a point where the direction of the force exerted by the second elastic member 160 changes, the second elastic member 160 exerts a force on the second locking member 130 to rotate it toward the unlocked state, and the second locking member 130 reaches the unlocked state. At this time, the first locking member 120 may not yet have reached the unlocked state. Then, after the first locking member 120 rotates to a point where the direction of the force exerted by the first elastic member 150 changes, the first elastic member 150 exerts a force on the first locking member 120 to rotate it toward the unlocked state to drive the first locking member 120 to continue rotating, so that the first shaft 190 slides to the first position 143c, thereby bringing the first locking member 120 to the unlocked state.

In summary, in the connecting assembly 100, the drawer connecting device, and the drawer provided in the present disclosure, the first locking member 120 and the second locking member 130 are rotatably mounted on the base plate 110, and the first locking member 120 and the second locking member 130 are connected via the connecting rod 140, so that in the event that the first locking member 120 and/or the second locking member 130 are pushed by the insert member 200 and rotate, the first locking member 120 and the second locking member 130 can rotate together, thereby locking with the insert member 200. This increases the locking range of panels and avoids the problem of localized stress concentration and loosening of the panels.

In addition, in the present disclosure, the first elastic member 150 is connected to the first locking member 120. In the event that the first locking member 120 is in the unlocked state or the locked state, the first locking member 120 can be maintained in that state under the action of the first elastic member 150, avoiding looseness. Moreover, in the event that the first locking member 120 is pushed by the insert member 200 and transitions from the unlocked state to the locked state, the force exerted by the first elastic member 150 on the first locking member 120 changes from initially driving the first locking member 120 to rotate toward the unlocked state to driving it to rotate toward the locked state, which simplifies the structure of the connecting assembly 100, as a single elastic member can simultaneously provide both unlocking and locking functions.

Finally, to avoid the problem that both the first locking member 120 and the second locking member 130 cannot rotate to the locked state, the first locking member 120 or the first end 141 of the connecting rod 140 is provided with a compensation slot 143. When the second locking member 130 and/or the first locking member 120 is pushed by the insert member 200 moving along the first direction X and rotates and the second locking member 130 is locked with the insert member 200, the first locking member 120 is not yet locked with the insert member 200, and the second locking member 130 cannot continue rotating. At this time, the first shaft 190 can be driven by the first elastic member 150 to slide along the compensation slot 143, allowing the first locking member 120 to further rotate toward the locked state and thereby lock with the insert member 200. This avoids the problem that the first locking member 120 and the second locking member 130 cannot both lock the insert member 200 due to incompatibility between them.

The present specification refers to the accompanying drawings to disclose the present disclosure and also enables those skilled in the art to practice the present disclosure, including making and using any device or system, employing suitable materials, and using any combination of methods. The scope of the present disclosure is defined by the claimed technical solutions and includes other examples that occur to those skilled in the art. Such other examples are intended to be within the protection scope determined by the claimed technical solutions of the present disclosure if they have structural elements that do not differ from the literal language of the claimed technical solutions, or if they include equivalent structural elements having insubstantial differences from the literal language of the claimed technical solutions.

## Claims

1. A connecting assembly, comprising:
a base plate;
a first locking member, rotatably connected to the base plate about a first axis;
a second locking member, rotatably connected to the base plate about a second axis;
a connecting rod, comprising a first end rotatably connected to the first locking member and a second end rotatably connected to the second locking member, and
a first elastic member, wherein one end of the first elastic member is connected to the first locking member, another end of the first elastic member is connected to the base plate, and the first elastic member is configured to provide a force for rotating the first locking member toward an unlocked state or a locked state;
a compensation slot is provided in the first locking member, the second locking member, or the connecting rod;
the compensation slot is configured such that in the event that the first locking member and/or the second locking member is pushed by an insert member moving along a first direction and the second locking member is rotated to the locked state, the first locking member is capable of being rotated to the locked state by means of the compensation slot under an action of the first elastic member.

2. The connecting assembly of claim 1, wherein the first locking member or the first end is provided with the compensation slot, the first locking member is rotatably connected to the first end through a first shaft, and the first shaft is inserted into the compensation slot;
wherein in the event that the first locking member and/or the second locking member is pushed by the insert member moving along the first direction and the second locking member is rotated to the locked state, the first shaft is capable of sliding along the compensation slot, allowing the first locking member to rotate to the locked state.

3. The connecting assembly of claim 2, wherein the compensation slot comprises a first position and a second position, in the event that the first locking member is rotated to the unlocked state, the first elastic member exerts a force on the first locking member to rotate the first locking member toward the unlocked state, and the first shaft is located at the first position; and in the event that the first locking member is rotated to the locked state, the first elastic member exerts a force on the second locking member to rotate the second locking member toward the locked state, and the first shaft is located at the second position.

4. The connecting assembly of claim 3, wherein the compensation slot is located on the first end of the connecting rod, the first position and the second position are sequentially arranged along a length direction of the connecting rod, one end of the first shaft is connected to the first locking member, another end of the first shaft protrudes out of the compensation slot, and the second position is closer to the second end than the first position.

5. The connecting assembly of any one of claims 1 to 4, wherein the first locking member is provided with a first snap slot, one end of the first snap slot is configured as a first opening, and another end of the first snap slot is configured as a first closed end; and the second locking member is provided with a second snap slot, one end of the second snap slot is configured as a second opening, and another end of the second snap slot is configured as a second closed end;
in the event that the first locking member is in the locked state, the insert member is inserted into the first snap slot, and in the event that the second locking member is in the locked state, the insert member is inserted into the second snap slot.

6. The connecting assembly of claim 5, wherein the first snap slot comprises a first inner wall and a second inner wall arranged oppositely in sequence away from the first axis, and in the event that the first locking member is in the locked state, the insert member is inserted between the first inner wall and the second inner wall;
the second snap slot comprises a third inner wall and a fourth inner wall arranged oppositely in sequence away from the second axis, and in the event that the second locking member is in the locked state, the insert member is inserted between the third inner wall and the fourth inner wall.

7. The connecting assembly of claim 6, wherein the second inner wall extends from the first closed end to the first opening of the first snap slot, and in an extension direction of the second inner wall, a distance from the second inner wall to the first axis is constant or gradually increases; and/or the fourth inner wall extends from the second closed end to the second opening of the second snap slot, and in an extension direction of the fourth inner wall, a distance from the fourth inner wall to the second axis is constant or gradually increases.

8. The connecting assembly of claim 6, wherein the first inner wall extends from the first closed end to the first opening, and in an extension direction of the first inner wall, a distance from the first inner wall to the first axis gradually increases; and/or
the third inner wall extends from the second closed end to the second opening, and in an extension direction of the third inner wall, a distance from the third inner wall to the second axis gradually increases.

9. The connecting assembly of any one of claims 1 to 4, wherein in the event that the first locking member is in the unlocked state, a direction of a force exerted on the first locking member by the first elastic member is toward a first side of the first axis; and in the event that the first locking member is in the locked state, the direction of the force exerted on the first locking member by the first elastic member is toward a second side of the first axis,
wherein, the first side and the second side are two opposite sides of the first axis.

10. The connecting assembly of any one of claims 1 to 4, further comprising a first limiting portion and a second limiting portion configured to limit insertion of the insert member along the first direction, wherein the first limiting portion is arranged at a side of the first locking member in the first direction, and the second limiting portion is arranged at a side of the second locking member in the first direction.

11. The connecting assembly of claim 5, wherein the insert member is provided with a first snap-fit block and a second snap-fit block, and in the event that the insert member is inserted into the connecting assembly along the first direction, the first snap-fit block is inserted into the first snap slot, and the second snap-fit block is inserted into the second snap slot, such that the first locking member and the second locking member are in the locked state with the insert member;
in the event that the first locking member and the second locking member are in the locked state:
defining a line passing through a center of the first snap-fit block and extending along the first direction as a first reference line, and a line passing through the center of the first snap-fit block and perpendicularly intersecting the first axis is defined as a first connecting line;
defining a line passing through a center of the second snap-fit block and extending along the first direction as a second reference line, defining a line passing through the center of the second snap-fit block and perpendicularly intersecting the second axis as a second connecting line; and
defining an included angle formed by the first connecting line and the first reference line, or formed by the second connecting line and the second reference line, as θ, and satisfying 0°≤θ≤θₖ, wherein θₖ is a critical angle at which the first locking member or the second locking member remains in the locked state with the insert member and the insert member is not capable of being pulled out from the first locking member or the second locking member.

12. The connector assembly of any one of claims 1 to 4, further comprising a second elastic member, wherein one end of the second elastic member is connected to the second locking member, another end of the second elastic member is connected to the base plate, and the second elastic member is configured to provide a force for rotating the second locking member toward an unlocked state or a locked state.

13. The connecting assembly of claim 12, wherein the first elastic member and the second elastic member are located at either side of the connecting rod.

14. The connecting assembly of any one of claims 1 to 4, wherein the first end is rotatably connected to the first locking member about a third axis and the second end is rotatably connected to the second locking member about a fourth axis;
the compensation slot is configured such that:
in the event that the first locking member or the first end is provided with the compensation slot, the third axis is capable of moving along the compensation slot so as to enable the first locking member to rotate to the locked state;
in the event that the second locking member or the second end is provided with the compensation slot, the fourth axis is capable of moving along the compensation slot so as to enable the first locking member to rotate to the locked state.

15. A drawer connecting device, comprising the insert member and the connecting assembly of any one of claims 1 to 14, wherein the insert member is configured to insert into the connecting assembly along the first direction and push and rotate the first locking member and/or the second locking member, and in the event that the first locking member and/or the second locking member is rotated to the locked state, the insert member is locked with the first locking member and the second locking member.

16. The drawer connecting device of claim 15, wherein the insert member is provided with a first snap-fit block and a second snap-fit block, the first locking member is provided with a first snap slot having a first opening, and the second locking member is provided with a second snap slot having a second opening;
in the event that the first snap-fit block is inserted into the first snap slot through the first opening and is confined in the first snap slot, the first locking member and the insert member are locked; in the event that the second snap-fit block is inserted into the second snap slot through the second opening and is confined in the second snap slot, the second locking member and the insert member are locked.

17. A drawer, comprising a side panel, a front panel and the drawer connecting device of any one of claims 15 to 16, wherein the front panel is connected to the insert member, and the side panel is connected to the connecting assembly.
